# EUROPÄISCHE PATENTANMELDUNG

(11) **EP 4 704 326 A1**
(43) Veröffentlichungstag der Anmeldung: **04.03.2026**
(21) Anmeldenummer: 25191162.4
(22) Anmeldetag: 23.07.2025
(51) Int. Cl.: H02P 6/182, A47L 15/00, G01M 1/00, H02P 21/14

(54) **ANTRIEBSSYSTEM**

(30) Priorität: 27.08.2024 LU 103363
(71) Anmelder: Miele & Cie. KG, 33332 Gütersloh (DE)
(72) Erfinder: Rodehüser, Tobias, 59329 Wadersloh (DE)

(57) **Zusammenfassung**

Die Erfindung betrifft ein Antriebssystem mit wenigstens einem Synchronmotor (1) mit einem Stator (13) und mit einem Rotor und mit wenigstens einer Steuerungseinheit, welche ausgebildet ist, wenigstens den Synchronmotor (1) zu betreiben.

Das Antriebssystem ist dadurch gekennzeichnet, dass die Steuerungseinheit ausgebildet ist, als Reibungsbestimmung des Synchronmotors (1)
• den Stator (13) mit einem ausreichend hohen Statorstrom (I_{S}) zu bestromen, um eine Drehbewegung des Rotors in eine erste Richtung zu veranlassen,
• den Stator (13) anschließend mit einem ausreichend hohen Statorstrom (I_{S}) zu bestromen, um eine Drehbewegung des Rotors in eine zweite Richtung zu veranlassen, und
• während der sich hierdurch einstellenden Schwingungsbewegung den eingeprägten Statorstrom der zweiten Richtung zu erfassen und/oder die Bestromung mit dem Statorstrom (I_{S}) zu beenden und die sich hierbei einstellende induzierte Polradspannung (U_{P}) der zweiten Richtung zu erfassen,
wobei die Steuerungseinheit ferner ausgebildet ist, aus den Werten des erfassten eingeprägten Statorstroms der zweiten Richtung und/oder aus der erfassten induzierten Polradspannung (U_{P}) der zweiten Richtung eine Reibung des Rotors zu bestimmen.

## Beschreibung

Die Erfindung betrifft ein Antriebssystem, ein Gerät mit wenigstens einem derartigen Antriebssystem sowie ein Verfahren zum Betrieb eines derartigen Antriebssystems.

Zu den bekannten elektrischen Motoren gehören die Synchronmotoren, welche einphasig mit Wechselstrom oder mehrphasig mit Drehstrom betrieben werden können. In jedem Fall wird ein konstant magnetisierter Läufer verwendet, welcher auch als Rotor bezeichnet werden kann. Hierzu können Permanentmagnete oder eine elektromagnetische Fremderregung verwendet werden. Die Bezeichnung Synchronmotor resultiert daraus, dass der Rotor von einem bewegten magnetischen Drehfeld im Ständer, auch Stator genannt, synchron mitgenommen wird. Somit weist der Synchronmotor im Betrieb eine zur Wechselspannung synchrone Bewegung auf, dessen Drehzahl über die Polpaarzahl des Stators des Synchronmotors mit der Frequenz der Wechselspannung verknüpft ist.

Mehrsträngige Permanentmagnet-Synchronmotoren werden üblicherweise über einen Frequenzumrichter betrieben, wodurch ein geregelter Betrieb ermöglicht wird, indem Drehrichtung, Drehzahl und Drehmoment des Synchronmotors über die Frequenz und Amplitude der Ausgangswechselspannung des Frequenzumrichters vorgegeben werden können. Dies kann das Drehverhalten des Synchronmotors z.B. beim Anlauf sowie in Abhängigkeit der anzutreibenden Last gezielt beeinflussen.

Als kostengünstige Alternative zu mittels Frequenzumrichtern betriebenen Synchronmotoren ist es bei einfachen Anwendungen wie z.B. bei wasserführenden Haushaltsgeräten wie beispielsweise bei Laugenpumpen in Waschmaschinen bekannt, ungeregelte Einphasen-Synchronmotoren als Antriebe z.B. von Laugenpumpen zum Abpumpen der Lauge aus dem Waschraum einzusetzen. Dies gilt ebenso für Umflutpumpen von Waschmaschinen. Hierbei werden üblicherweise permanenterregte Einphasen-Synchronmotoren eingesetzt, so dass auf einen elektrischen Kontakt vom Stator zum Rotor mittels Schleifringen oder Bürsten verzichtet werden kann.

Wie bereits allgemein erwähnt ist es auch bei permanenterregten Einphasen-Synchronmotoren vorteilhaft, dass diese im Betrieb eine zur Wechselspannung synchrone Bewegung ausführen, deren Drehzahl über die Polpaarzahl des Stators mit der Frequenz der Wechselspannung verknüpft ist. Somit ist der Betrieb eines permanenterregten Einphasen-Synchronmotors mit der Frequenz der Wechselspannung des Netzes sehr einfach möglich und es kann auf kostenintensive Steuerungen sowie Frequenzumrichter verzichtet werden. Vielmehr ist eine einfache Ansteuerung des Einphasen-Synchronmotors über eine H-Brücke ausreichend, welche von einer Steuerungseinheit betrieben werden kann. Dies kommt insbesondere einfachen Anwendungen ungeregelt mit konstanter Drehzahl wie z.B. bei Laugenpumpen in Waschmaschinen zugute.

Wie bereits erwähnt, kommen in Waschmaschinen bzw. in Waschautomaten verschiedene Pumpen zum Einsatz, z.B. die Umflutpumpe oder die Laugenpumpen zum Abpumpen des Wassers aus dem Waschautomaten. Dabei können sich Fusseln, Knöpfe oder andere Gegenstände, die sich im Wasserkreislauf befinden, vor das Flügelrad der Pumpe setzen und dieses blockieren. Dies kann dazu führen, dass keine Umflutung in der Waschmaschine mehr stattfindet bzw. das Wasser nicht abgepumpt werden kann, wodurch die Reinigungswirkung des Waschvorgangs beeinträchtigt und die Wäsche nicht mehr richtig sauber werden kann. Bei der Ablaufpumpe kann eine Blockierung dazu führen, dass das Wasser nicht mehr in der Waschmaschine abgepumpt werden kann. Des Weiteren kann eine Blockade dazu führen, dass die Pumpe durch eine dauerhafte Ansteuerung im Blockierungsfall unzulässig überhitzt.

Die DE 10 2021 125 137 A1 beschreibt ein Antriebssystem mit wenigstens einem Synchronmotor mit einem Stator und mit einem Rotor und mit wenigstens einer Steuerungseinheit, welche ausgebildet ist, wenigstens den Synchronmotor zu betreiben, wobei die Steuerungseinheit ausgebildet ist, als Blockierungserkennung des Synchronmotors
- den Stator mit einem ausreichend hohen Statorstrom zu bestromen, um eine Drehbewegung des Rotors in eine erste Richtung zu veranlassen,
- den eingeprägten Statorstrom der ersten Richtung zu erfassen und bzw. oder die Bestromung mit dem Statorstrom zu beenden und die sich hierbei einstellende induzierte Polradspannung der ersten Richtung zu erfassen,
- den Stator mit einem ausreichend hohen Statorstrom zu bestromen, um eine Drehbewegung des Rotors in eine zweite Richtung zu veranlassen, und
- den eingeprägten Statorstrom der zweiten Richtung zu erfassen und bzw. oder die Bestromung mit dem Statorstrom zu beenden und die sich hierbei einstellende induzierte Polradspannung der zweiten Richtung zu erfassen,
wobei die Steuerungseinheit ferner ausgebildet ist,
- aus den Werten des erfassten eingeprägten Statorstroms der ersten Richtung und bzw. oder aus der erfassten induzierten Polradspannung der ersten Richtung und
- aus den Werten des erfassten eingeprägten Statorstroms der zweiten Richtung und bzw. oder aus der erfassten induzierten Polradspannung der zweiten Richtung einen Stillstand des Rotors in beide Richtungen zu erkennen.

Mittels des Verfahrens der DE 10 2021 125 137 A1 kann somit bei einem derartigen Antriebssystem zwischen dem Vorliegen einer Blockade des Rotors des Synchronmotors und der Drehbarkeit des Rotors des Synchronmotors unterschieden werden.

Derartige Antriebssysteme können jedoch aufgrund der Reibung der Lager und bzw. oder Dichtungen auch unterschiedlich leicht- bzw. schwergängig sein, was sich auf das Betriebsverhalten des Antriebssystems bzw. dessen Synchronmotor auswirken kann. Dies kann bisher nicht erkannt, quantifiziert und beim Betrieb des Synchronmotors berücksichtigt werden.

Der Erfindung stellt sich somit das Problem, eine Reibung des Rotors bzw. dessen Welle oder Dichtung eines Synchronmotors eines Antriebssystems der eingangs beschriebenen Art bestimmen zu können. Dies soll insbesondere für einen einphasigen Synchronmotor erfolgen können. In jedem Fall soll das Betriebsverhalten des Synchronmotors an die bestimmte

Reibung angepasst werden können. Dies soll insbesondere möglichst einfach, kostengünstig, bauraumsparend, energiesparend und bzw. oder verlässlich erfolgen können. Zumindest soll eine Alternative zu bekannten derartigen Antriebssystemen geschaffen werden.

Erfindungsgemäß wird dieses Problem durch ein Antriebssystem, durch ein Gerät sowie durch ein Verfahren mit den Merkmalen der unabhängigen Ansprüche gelöst. Vorteilhafte Ausgestaltungen und Weiterbildungen der Erfindung ergeben sich aus den nachfolgenden Unteransprüchen.

Somit betrifft die Erfindung ein Antriebssystem mit wenigstens einem Synchronmotor mit einem Stator und mit einem Rotor und mit wenigstens einer Steuerungseinheit, welche ausgebildet ist, wenigstens den Synchronmotor zu betreiben.

Das Antriebssystem ist dadurch gekennzeichnet, dass die Steuerungseinheit ausgebildet ist, als Reibungsbestimmung des Synchronmotors
- den Stator mit einem ausreichend hohen Statorstrom zu bestromen, um eine Drehbewegung des Rotors in eine erste Richtung zu veranlassen,
- den Stator anschließend mit einem ausreichend hohen Statorstrom zu bestromen, um eine Drehbewegung des Rotors in eine zweite Richtung zu veranlassen, und
- während der sich hierdurch einstellenden Schwingungsbewegung den eingeprägten Statorstrom der zweiten Richtung zu erfassen und bzw. oder die Bestromung mit dem Statorstrom zu beenden und die sich hierbei einstellende induzierte Polradspannung der zweiten Richtung zu erfassen,

wobei die Steuerungseinheit ferner ausgebildet ist, aus den Werten des erfassten eingeprägten Statorstroms der zweiten Richtung und bzw. oder aus der erfassten induzierten Polradspannung der zweiten Richtung eine Reibung des Rotors zu bestimmen.

Der vorliegenden Erfindung liegt die Erkenntnis zugrunde, dass ein geregelter Synchronmotor zwei Vorzugslagen besitzt. Wenn der Stator nicht bestromt wird, befindet sich der Rotor des Synchronmotors in einer der beiden Vorzugslagen.

Wird im Stator nun ein ausreichend hoher DC-Strom eingeprägt, welcher ein magnetisches Feld zur Folge hat, so verharrt der Rotor entweder in seiner aktuellen Position als eine der beiden Vorzugslagen oder aber der Rotor bewegt sich in die andere der beiden Vorzugslagen. Hinsichtlich dem "Verharren des Rotors in seiner aktuellen Position" sei angemerkt, um genau zu sein, dass eine kleine Bewegung der Rotors auch dann auftritt, wenn der Rotor sich in einer Vorzugslage befindet und ein positiver Strom eingeprägt wird. Die Winkeländerung entspricht genau dem Ruhewinkel bzw. dem natürlichen Winkel des Rotors θ₀. Die Bewegung ist allerdings sehr gering, da die Winkeländerung nur wenige Grad beträgt. Die Bewegung ist anhand des Stroms und der induzierten Spannung nicht erkennbar und sei daher an dieser Stelle vernachlässigt. Der Einfachheit halber wird von "keiner Bewegung" gesprochen.

Die Bewegung des Rotors von der einen in die andere Vorzugslage ist über die Stromform erkennbar. Es kann aber auch die induzierte Spannung beim Abschalten des Stroms erkannt werden, ob der Rotor zuvor in Bewegung versetzt worden war oder nicht.

Somit kann beim Einschwingen des Rotors nach einer Drehbewegung, d.h. nach dem zweiten Bestromen des Synchronmotors, das Schwingungsverhalten ausgewertet werden. Beispielsweise kann sowohl die Periode der Schwingungen, das Abklingverhalten aber auch die Amplitude der gemessenen induzierten Spannung herangezogen werden, wie nachfolgend näher erläutert werden wird, um die Reibung bzw. um die Schwergängigkeit des Rotors bzw. dessen Welle bewerten zu können. Die selbigen Parameter lassen sich auch beim Strom während der zweiten Bestromung ermitteln.

Somit kann erfindungsgemäß aufgrund dieser Parameter bzw. aufgrund dieser physikalischer Größen auf das Maß der Reibung geschlossen bzw. die Reibung bestimmt werden, woraus sich auch eine Schwergängigkeit des Synchronmotors ergibt. Dies bezieht sich auch auf die Welle und bzw. oder auf die Dichtung zwischen Welle und Gehäuse des Synchronmotors.

Findet beim zweiten Bestromen keine Drehbewegung statt, so kann hierdurch darauf geschlossen werden, dass der Rotor blockiert sein kann. Entsprechend kann zusätzlich auch eine sichere Erkennung der Blockierung des Rotors des Synchronmotors erfolgen.

Gemäß einem Aspekt der Erfindung ist die Steuerungseinheit ferner ausgebildet, die Reibung des Rotors
- aus der Amplitude des erfassten eingeprägten Statorstroms der Schwingungsbewegung,
- aus der Periode des erfassten eingeprägten Statorstroms der Schwingungsbewegung,
- aus dem Abklingverhalten des erfassten eingeprägten Statorstroms der Schwingungsbewegung,
- aus der Amplitude des erfassten induzierten Polradspannung (UP) der Schwingungsbewegung,
- aus der Periode des erfassten induzierten Polradspannung (UP) der Schwingungsbewegung und/oder
- aus dem Abklingverhalten des erfassten induzierten Polradspannung (UP) der Schwingungsbewegung
zu bestimmen.

Dies können, wie bereits zuvor erwähnt, verschiedene konkrete Parameter darstellen, um die Reibung des Rotors zu bestimmen.

Gemäß einem weiteren Aspekt der Erfindung ist die Steuerungseinheit ferner ausgebildet, den Synchronmotor in Abhängigkeit der bestimmten Reibung zu betreiben.

Somit kann das Reibungsverhalten, insbesondere vor dem Start des Synchronmotors, bestimmt bzw. erkannt werden, um in Abhängigkeit der erkannten bzw. der bestimmten Reibung des Rotors die Parameter des Synchronmotors bzw. dessen Steuerungseinheit zu adaptieren und hierdurch eine verbesserte oder sogar optimale Regelung des Antriebs zu gewährleisten. Dies kann auch die Zuverlässigkeit und Robustheit der Regelung erhöhen. Insbesondere bei Anwendungen, bei denen die Drehrichtung entscheidend ist, kann durch die Adaptierung der Reglerparameter die Robustheit der Regelung erhöht werden, da der Anlauf in die gewünschte Drehrichtung auch bei einem schwergängigen Lager zuverlässiger wird.

Gemäß einem weiteren Aspekt der Erfindung ist die erste Richtung die positive Richtung des Synchronmotors und die zweite Richtung die negative Richtung des Synchronmotors.

Gemäß einem weiteren Aspekt der Erfindung ist der Synchronmotor ein geregelter Synchronmotor und die Steuerungseinheit ausgebildet, die Bewegung des Rotors drehzahlgeregelt zu betreiben. Dies kann die Nutzungsmöglichkeiten des Synchronmotors verbessern bzw. erweitern.

Gemäß einem weiteren Aspekt der Erfindung ist die Steuerungseinheit ferner ausgebildet, die Reibungsbestimmung auszuführen:
- unmittelbar vor jedem Start einer Benutzung des Synchronmotors,
- unmittelbar vor dem Start einer ersten Benutzung des Synchronmotors bei einer Benutzung eines Geräts, welches den Synchronmotor verwendet, oder
- zwischen zwei Benutzungen des Synchronmotors.

Dies kann jeweils ein geeigneter Zeitpunkt sein, um die Reibung des Rotors wie zuvor beschrieben zu bestimmen und diese Information anschließend zu verwenden, insbesondere zum Betreiben des Synchronmotor in Abhängigkeit der bestimmten Reibung.

Gemäß einem weiteren Aspekt der Erfindung ist die Steuerungseinheit ferner ausgebildet, die Reibungsbestimmung ausgehend von einem stillstehenden Rotor des Synchronmotors auszuführen. Dies kann das Bestimmen der Reibung des Rotors vereinfachen bzw. ermöglichen. Auch kann dann die bestimmte Reibung anschließend zum Betreiben des Synchronmotor verwendet werden.

Die vorliegende Erfindung betrifft auch ein Gerät, vorzugsweise ein Haushaltsgerät, besonders vorzugsweise eine Waschmaschine oder einen Geschirrspüler, mit wenigstens einem Antriebssystem wie zuvor beschrieben. Hierdurch kann ein Gerät geschaffen werden, um die zuvor beschriebenen Eigenschaften und Vorteile eines erfindungsgemäßen Antriebssystems umsetzen und nutzen zu können. Dies kann insbesondere bei Geräten und insbesondere bei Haushaltsgeräten erfolgen, welche wenigstens eine Pumpe zum Fördern von Fluiden aufweisen. Dies könnten insbesondere die Umflutpumpe und bzw. oder die Laugenpumpe einer Waschmaschine bzw. eines Waschautomaten sein, ebenso eine entsprechende Pumpe einer Geschirrspülmaschine. Das Verfahren ist nicht auf Pumpen beschränkt, sondern kann auch bei Lüfterantrieben, z.B. für Backofenlüfter oder Lüfter im Geschirrspüler zum Einsatz kommen.

Die vorliegende Erfindung betrifft ferner ein Verfahren zum Betrieb eines Antriebssystems wie zuvor beschrieben mit wenigstens den folgenden Schritten:
- Bestromen des Stators mit einem ausreichend hohen Statorstrom, um eine Drehbewegung des Rotors in eine erste Richtung zu veranlassen,
- anschließendes Bestromen des Stators mit einem ausreichend hohen Statorstrom, um eine Drehbewegung des Rotors in eine zweite Richtung zu veranlassen,
- während der sich hierdurch einstellenden Schwingungsbewegung, Erfassen des eingeprägten Statorstroms der zweiten Richtung und bzw. oder Beenden der Bestromung mit dem Statorstrom und Erfassen der sich hierbei einstellenden induzierten Polradspannung der zweiten Richtung, und
- Bestimmen einer Reibung des Rotors aus den Werten des erfassten eingeprägten Statorstroms der zweiten Richtung und bzw. oder aus der erfassten induzierte Polradspannung der zweiten Richtung.

Hierdurch kann ein Verfahren zur Verfügung gestellt werden, um die zuvor beschriebenen Eigenschaften und Vorteile eines erfindungsgemäßen Antriebssystems als ein Verfahren umsetzen und nutzen zu können.

Es sei angemerkt, dass im Sinne der Erfindung der vorliegenden Patentanmeldung unter "keiner Bewegung" bzw. unter "Stillstand" auch sehr geringe Bewegungen des Rotors gegenüber dem Stator verstanden werden sollen, welche auftreten können, falls sich der Rotor in einer Vorzugslage bzw. in einer Raststellung befindet und ein Strom eingeprägt wird. Die Winkeländerung entspricht dann genau dem Ruhewinkel bzw. dem natürlichen Winkel des Rotors, ist allerdings sehr gering, da die Winkeländerung nur wenige Grad beträgt. Diese Bewegung ist anhand des Stroms und der induzierten Spannung nicht erkennbar und kann daher vernachlässigt werden, so dass auch in diesem Fall im Sinne der Erfindung der vorliegenden Patentanmeldung der Einfachheit halber von keiner Bewegung bzw. von Stillstand gesprochen werden soll.

Ein Ausführungsbeispiel der Erfindung ist in den Zeichnungen rein schematisch dargestellt und wird nachfolgend näher beschrieben. Es zeigt
- Figur 1: ein Ersatzschaltbild eines Synchronmotors eines erfindungsgemäßen Antriebssystems;
- Figur 2: ein Ablaufdiagramm eines erfindungsgemäßen Verfahrens; und
- Figur 3: ein Messdiagramm einer Anwendung des erfindungsgemäßen Antriebssystems bzw. Verfahrens.

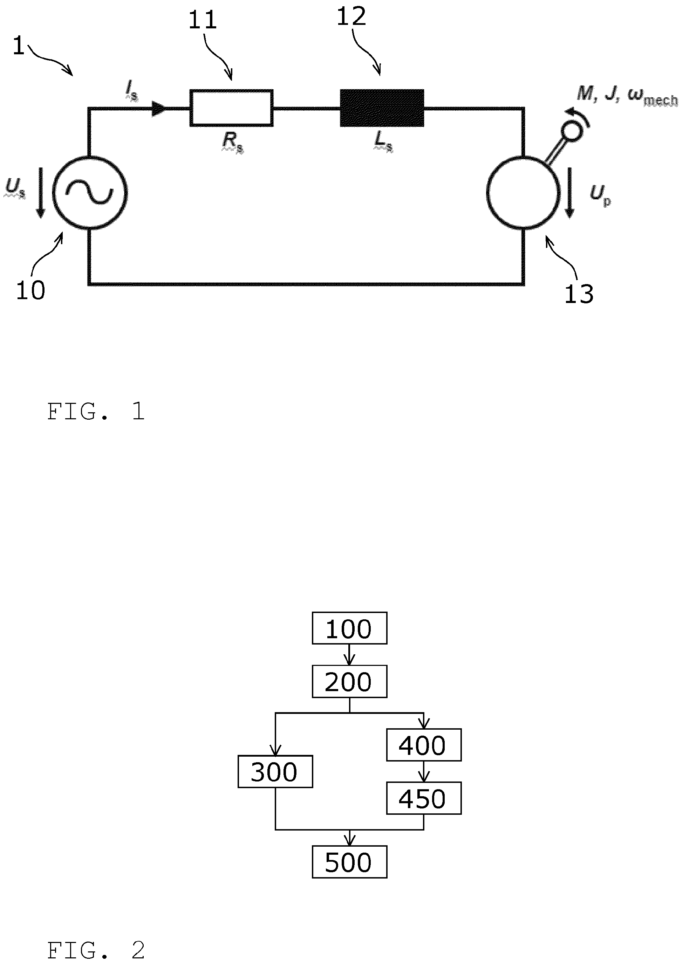

Das Ersatzschaltbild eines erfindungsgemäßen Synchronmotors 1 der Figur 1 weist eine Spannungsquelle 10 auf, über welcher eine Statorspannung U_{S} anliegt, welche entsprechend auch über einen Stator 13 des Synchronmotors 1 anliegt. Die Statorspannung U_{S} bewirkt einen Statorstrom I_{S} des Synchronmotors 1, welcher durch ein Widerstandselement 11 mit einem ohmschen Widerstand R_{S} und durch ein Induktionselement 12 mit einer Induktivität L_{S} fließt. Der Statorstrom I_{S} des Synchronmotors 1 bewirkt eine Drehung eines Rotors (nicht dargestellt) in eine der beiden Drehrichtungen mit einem Drehmoment M, mit einer Leistung J bzw. mit einer Kreisfrequenz ω_{mech}.

Wird das Bestromen des Stators 13 mit einem eingeprägten Statorstrom beendet, so dreht sich der Rotor mit schnell sinkender Kreisfrequenz ω_{mech} kurzzeitig weiter bis der Rotor den Stillstand in einer seiner Ruhelagen bzw. Raststellungen erreicht. Während dieses Auslaufens der Bewegung wird vom Rotor eine Polradspannung U_{P} bzw. eine Läuferspannung U_{P} im Stator 13 induziert. Die Werte dieser Parameter können jeweils von einer Steuerungseinheit (nicht dargestellt) des Antriebssystems 1 erfasst bzw. bestimmt werden, welche den Synchronmotor 13 auch steuern bzw. betreiben kann.

Um nun die Reibung bzw. das Reibverhalten des Synchronmotors 1 zu bestimmen, kann mittels des erfindungsgemäßen Antriebssystems das erfindungsgemäße Verfahren, siehe Ablaufdiagramm der Figur 2, wie folgt ausgeführt werden.

Es erfolgt ein Bestromen 100 des Stators 13 mit einem ausreichend hohen Statorstrom I_{S}, um eine Drehbewegung des Rotors in eine erste, vorzugsweise positiven, Richtung zu veranlassen. Anschließend erfolgt ein Bestromen 200 des Stators 13 mit einem ausreichend hohen Statorstrom I_{S}, um eine Drehbewegung des Rotors in eine zweite, vorzugsweise negative, Richtung zu veranlassen.

Während der sich hierdurch einstellenden Schwingungsbewegung erfolgt zum einen ein Erfassen 300 des eingeprägten Statorstroms der zweiten Richtung und zum anderen ein Beenden 400 der Bestromung mit dem Statorstrom I_{S} und ein Erfassen 450 der sich hierbei einstellenden induzierten Polradspannung U_{P} der zweiten Richtung. Hierauf basierend erfolgt ein Bestimmen 500 einer Reibung des Rotors aus den Werten des erfassten eingeprägten Statorstroms der zweiten Richtung und aus der erfassten induzierte Polradspannung U_{P} der zweiten Richtung.

Zum Bestimmen 500 einer Reibung des Rotors können konkret die Amplitude des erfassten eingeprägten Statorstroms der Schwingungsbewegung, die Periode des erfassten eingeprägten Statorstroms der Schwingungsbewegung, das Abklingverhalten des erfassten eingeprägten Statorstroms der Schwingungsbewegung, die Amplitude des erfassten induzierten Polradspannung U_{P} der Schwingungsbewegung, die Periode des erfassten induzierten Polradspannung U_{P} der Schwingungsbewegung und bzw. oder aus dem Abklingverhalten des erfassten induzierten Polradspannung U_{P} der Schwingungsbewegung verwendet werden.

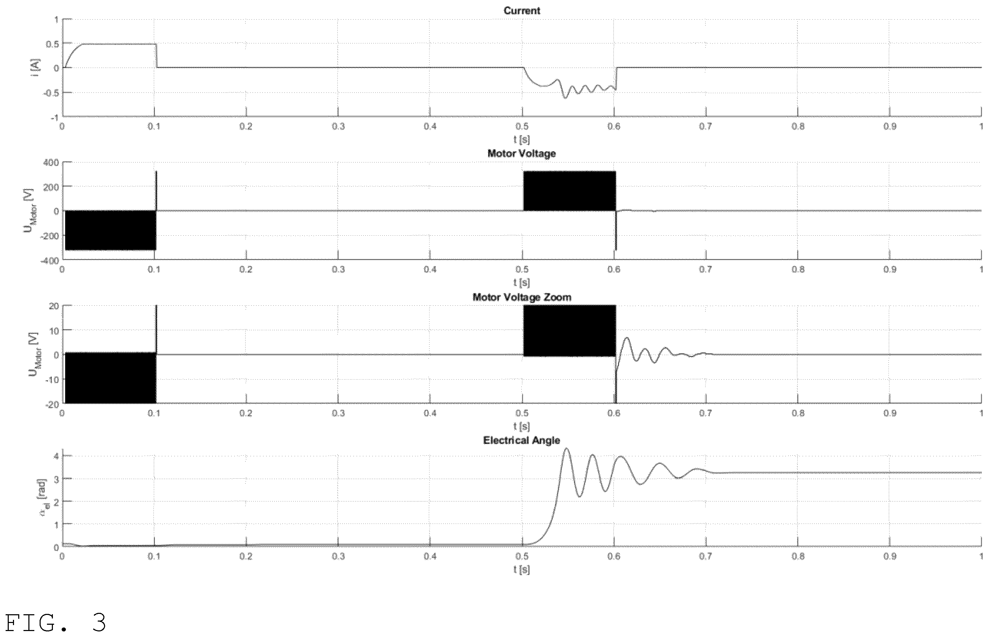

Durch das Einprägen von zwei ausreichend hohen DC-Strömen (die Stromhöhe muss für die Ausrichtung des Rotors ausreichend sein) und das Messen der tatsächlich eingeprägten Ströme und bzw. oder der induzierten Spannung beim Abschalten des DC-Stroms, vgl. Messdiagramm der Figur 3, kann ein Maß für die Schwergängingkeit bzw. für die Reibung und somit das Dämpfungsverhalten des Systems ermittelt werden. Mit diesem ermittelten Parametern können die Reglerparameter und Anlaufparameter zum Betrieb des Synchronmotors 1 adaptiv bzw. nach vorgegebenen Regeln verändert werden, so dass der Synchronmotor 1 sicher anläuft bzw. betrieben werden kann.

Beim Messen der induzierten Spannung kann es vorteilhaft sein darauf zu achten, dass die Bestromungszeit so gewählt ist, dass sich der Rotor im Falle einer Bewegung auch noch in Bewegung befindet (und schwingt), da ansonsten keine Spannung induziert wird und diese dann zur Bestimmung der Reibung nicht zur Verfügung steht.

Zum Einprägen des Stroms kann eine H-Brücke verwendet werden. Der Strom kann geregelt werden. Bewegt sich der Rotor nicht oder nur sehr wenig, wirkt nur der ohmsche und induktive Anteil und es gibt keine induzierte Spannung (siehe Ersatzschaltbild der Figur 1). Deshalb erkennt man dabei annähernd ein PT-1 Einschwingverhalten. Bewegt sich der Rotor jedoch, wird Spannung induziert, welche als Störgröße am Strom erkennbar ist.

Das Verfahren kann vor jedem Start des Synchronmotors durchgeführt werden, oder aber in Zeiten, in denen der Synchronmotor nicht läuft, oder einmalig vor dem Start.

### Bezugszeichenliste (Bestandteil der Beschreibung)

- I_{S}: Statorstrom
- J: Leistung
- L_{S}: Induktivität
- M: Drehmoment
- U_{P}: induzierte Polradspannung bzw. Läuferspannung
- U_{S}: Statorspannung
- R_{S}: ohmscher Widerstand
- ω_{mech}: Kreisfrequenz

- 1: Synchronmotor
- 10: Spannungsquelle
- 11: Widerstandselement
- 12: Induktionselement
- 13: Stator

- 100: Bestromen des Stators 13 mit einem ausreichend hohen Statorstrom I_{S}, um eine Drehbewegung des Rotors in eine erste Richtung zu veranlassen
- 200: anschließendes Bestromen des Stators 13 mit einem ausreichend hohen Statorstrom I_{S}, um eine Drehbewegung des Rotors in eine zweite Richtung zu veranlassen
- 300: Erfassen des eingeprägten Statorstroms der zweiten Richtung
- 400: Beenden 400 der Bestromung mit dem Statorstrom I_{S}
- 450: Erfassen 450 der sich hierbei einstellenden induzierten Polradspannung U_{P} der zweiten Richtung
- 500: Bestimmen einer Reibung des Rotors aus den Werten des erfassten eingeprägten Statorstroms der zweiten Richtung und/oder aus der erfassten induzierte Polradspannung U_{P} der zweiten Richtung

## Patentansprüche

1. Antriebssystem
mit wenigstens einem Synchronmotor (1) mit einem Stator (13) und mit einem Rotor und
mit wenigstens einer Steuerungseinheit, welche ausgebildet ist, wenigstens den Synchronmotor (1) zu betreiben,
**dadurch gekennzeichnet, dass**
die Steuerungseinheit ausgebildet ist, als Reibungsbestimmung des Synchronmotors (1)
• den Stator (13) mit einem ausreichend hohen Statorstrom (I_{S}) zu bestromen, um eine Drehbewegung des Rotors in eine erste Richtung zu veranlassen,
• den Stator (13) anschließend mit einem ausreichend hohen Statorstrom (I_{S}) zu bestromen, um eine Drehbewegung des Rotors in eine zweite Richtung zu veranlassen, und
• während der sich hierdurch einstellenden Schwingungsbewegung den eingeprägten Statorstrom der zweiten Richtung zu erfassen und/oder die Bestromung mit dem Statorstrom (I_{S}) zu beenden und die sich hierbei einstellende induzierte Polradspannung (U_{P}) der zweiten Richtung zu erfassen,
wobei die Steuerungseinheit ferner ausgebildet ist, aus den Werten des erfassten eingeprägten Statorstroms der zweiten Richtung und/oder aus der erfassten induzierten Polradspannung (U_{P}) der zweiten Richtung eine Reibung des Rotors zu bestimmen.

2. Antriebssystem nach Anspruch 1,
wobei die Steuerungseinheit ferner ausgebildet ist, die Reibung des Rotors
• aus der Amplitude des erfassten eingeprägten Statorstroms der Schwingungsbewegung,
• aus der Periode des erfassten eingeprägten Statorstroms der Schwingungsbewegung,
• aus dem Abklingverhalten des erfassten eingeprägten Statorstroms der Schwingungsbewegung,
• aus der Amplitude des erfassten induzierten Polradspannung (U_{P}) der Schwingungsbewegung,
• aus der Periode des erfassten induzierten Polradspannung (U_{P}) der Schwingungsbewegung und/oder
• aus dem Abklingverhalten des erfassten induzierten Polradspannung (U_{P}) der Schwingungsbewegung
zu bestimmen.

3. Antriebssystem nach Anspruch 1 oder 2,
wobei die Steuerungseinheit ferner ausgebildet ist, den Synchronmotor (1) in Abhängigkeit der bestimmten Reibung zu betreiben.

4. Antriebssystem nach einem der vorangehenden Ansprüche,
wobei die erste Richtung die positive Richtung des Synchronmotors (1) und die zweite Richtung die negative Richtung des Synchronmotors (1) ist.

5. Antriebssystem nach einem der vorangehenden Ansprüche,
wobei der Synchronmotor (1) ein geregelter Synchronmotor (1) und die Steuerungseinheit ausgebildet ist, die Bewegung des Rotors drehzahlgeregelt zu betreiben.

6. Antriebssystem nach einem der vorangehenden Ansprüche,
wobei die Steuerungseinheit ferner ausgebildet ist, die Reibungsbestimmung auszuführen:
• unmittelbar vor jedem Start einer Benutzung des Synchronmotors (1),
• unmittelbar vor dem Start einer ersten Benutzung des Synchronmotors (1) bei einer Benutzung eines Geräts, welches den Synchronmotor (1) verwendet, oder
• zwischen zwei Benutzungen des Synchronmotors (1).

7. Antriebssystem nach einem der vorangehenden Ansprüche,
wobei die Steuerungseinheit ferner ausgebildet ist, die Reibungsbestimmung ausgehend von einem stillstehenden Rotor des Synchronmotors (1) auszuführen:

8. Gerät, vorzugsweise Haushaltsgerät, besonders vorzugsweise Waschmaschine oder Geschirrspüler,
mit wenigstens einem Antriebssystem nach einem der vorangehenden Ansprüche.

9. Verfahren zum Betrieb eines Antriebssystems nach einem der Ansprüche 1 bis 7 mit wenigstens den folgenden Schritten:
• Bestromen (100) des Stators (13) mit einem ausreichend hohen Statorstrom (I_{S}), um eine Drehbewegung des Rotors in eine erste Richtung zu veranlassen,
• anschließendes Bestromen (200) des Stators (13) mit einem ausreichend hohen Statorstrom (I_{S}), um eine Drehbewegung des Rotors in eine zweite Richtung zu veranlassen,
• während der sich hierdurch einstellenden Schwingungsbewegung, Erfassen (300) des eingeprägten Statorstroms der zweiten Richtung und/oder Beenden (400) der Bestromung mit dem Statorstrom (I_{S}) und Erfassen (450) der sich hierbei einstellenden induzierten Polradspannung (U_{P}) der zweiten Richtung, und
• Bestimmen (500) einer Reibung des Rotors aus den Werten des erfassten eingeprägten Statorstroms der zweiten Richtung und/oder aus der erfassten induzierte Polradspannung (U_{P}) der zweiten Richtung.
